Europäisches Patentamt

(19) European Patent Office

Office européen des brevets

(11) **EP 1 355 048 A1**

(12) **EUROPÄISCHE PATENTANMELDUNG**

(43) Veröffentlichungstag:
    **22.10.2003   Patentblatt 2003/43**

(51) Int Cl.⁷: **F01N 3/035**, F01N 3/023,
    B01J 23/58, B01D 53/94

(21) Anmeldenummer: **03006877.9**

(22) Anmeldetag: **28.03.2003**

(84) Benannte Vertragsstaaten:
    **AT BE BG CH CY CZ DE DK EE ES FI FR GB GR
    HU IE IT LI LU MC NL PT RO SE SI SK TR**
    Benannte Erstreckungsstaaten:
    **AL LT LV MK**

(30) Priorität: **28.03.2002  DE 10214343**

(71) Anmelder: **OMG AG & Co. KG**
    **63457 Hanau (DE)**

(72) Erfinder:
    • **Pfeifer, Marcus, Dr.**
      **42719 Solingen (DE)**
    • **van Setten, Barry, Dr.**
      **63517 Rodenbach (DE)**
    • **Kühn, Christian**
      **63594 Hasselroth (DE)**

    • **Staab, Roger**
      **63579 Freigericht (DE)**
    • **Ruwisch, Lutz Marc, Dr.**
      **64295 Darmstadt (DE)**
    • **Kattwinkel, Peter, Dipl.-Ing.**
      **51709 Marienheide (DE)**
    • **Gieshoff, Jürgen, Dr.**
      **63599 Biebergemünd (DE)**
    • **Lox, Egbert, Dr.**
      **36355 Hochwaldhausen (DE)**
    • **Kreuzer, Thomas, Dr.**
      **61184 Karben (DE)**

(74) Vertreter: **VOSSIUS & PARTNER**
    **Siebertstrasse 4**
    **81675 München (DE)**

(54)  **Partikelfilter mit einer katalytisch aktiven Beschichtung zur Beschleunigung der
      Russverbrennung während einer Regeneration**

(57)    Die Erfindung betrifft ein Partikelfilter für die
Entfernung von Ruß aus dem Abgas eines Dieselmotors enthaltend auf einem Filterkörper eine katalytisch
aktive Beschichtung zur Beschleunigung der Verbrennung der auf dem Filter gesammelten Rußpartikel während einer Regenerationsphase. Das Partikelfilter ist
dadurch gekennzeichnet, daß das es eine katalytische
Beschichtung aufweist, die Verbindungen des Bariums
und Magnesiums sowie mindestens ein Element der
Platingruppenmetalle enthält. Weiterhin betrifft die Erfindung ein Verfahren zur beschleunigten Verbrennung
von im mageren Abgas eines Dieselmotors auf dem
Partikelfilter gesammelten Rußpartikeln, wobei die
Rußpartikel eine Rußzündtemperatur aufweisen und
das Partikelfilter von Zeit zu Zeit durch Anheben der
Temperatur des Partikelfilters über die Rußzündtemperatur und Verbrennen der Rußpartikel aktiv regeneriert
wird.

EP 1 355 048 A1

**Beschreibung**

Die Erfindung betrifft ein Partikelfilter für die Entfernung von Ruß aus dem Abgas eines Dieselmotors. Das Partikelfilter enthält auf einem Filterkörper eine katalytisch aktive Beschichtung zur Beschleunigung der Verbrennung der auf dem Filter gesammelten Rußpartikel während einer Regenerationsphase. Weiterhin betrifft die Erfindung ein Verfahren zur beschleunigten Verbrennung von im mageren Abgas eines Dieselmotors auf dem Partikelfilter gesammelten Rußpartikeln.

Partikelfilter sind in der Lage, Rußpartikel aus dem mageren Abgas von Verbrennungsmotoren herauszufiltern und so deren Ausstoß in die Atmosphäre zu verhindern. Dabei finden verschiedene Filterkonzepte ihren Einsatz, wie zum Beispiel Wandflußfilter, Filter aus keramischen Fasern oder keramische oder metallische Schäume sowie Filter aus Drahtgeflechten. Damit können Filtrationsgrade von deutlich über 95% erzielt werden.

Die eigentliche Schwierigkeit besteht aber nicht in der Filtration der Rußpartikel, sondern in der Regeneration der eingesetzten Filter. Kohlenstoffruß verbrennt spontan erst bei Temperaturen von etwa 600 °C. Diese Temperaturen werden aber zum Beispiel von modernen Dieselmotoren im allgemeinen nur bei Vollast erreicht. Daher sind zusätzliche, unterstützende Maßnahmen zur Oxidation der aus dem Abgas abgetrennten Rußpartikel notwendig.

Man unterscheidet zwischen aktiven und passiven Maßnahmen: Bei den aktiven Maßnahmen wird die Temperatur des Filters beispielsweise durch eine elektrische Aufheizung über die zur Oxidation des Rußes notwendige Temperatur angehoben. Solche Maßnahmen sind stets mit einem Kraftstoffmehrverbrauch verbunden. Bei den passiv eingreifenden Systemen wird zum Beispiel durch die Verwendung von metallorganischen Kraftstoffadditiven wie Ferrocen oder durch eine katalytische Beschichtung des Filters die Rußzündtemperatur abgesenkt.

Die DE 31 41 713 A1 beschreibt eine die Rußzündtemperatur herabsetzende Beschichtung, dessen aktive Substanz Silbervanadat ist. Eine Weiterbildung dieser Erfindung wird in der DE 32 32 729 C2 beschrieben. Danach kann die die Zündtemperatur senkende Beschichtung als aktive Substanz Lithiumoxid, Kupferchlorid, Vanadinoxid/Alkalimetalloxid-Kombinationen, Lithium-, Natrium-, Kalium-, oder Cervanadat oder ein Perrhenat oder eine Kombination dieser Substanzen enthalten.

Die DE 34 07 172 beschreibt eine Einrichtung zur Entfernung von oxidierbaren festen, flüssigen und gasförmigen Schadstoffen aus dem Abgase von Dieselmotoren. Zu diesem Zweck enthält die Einrichtung in einem Gehäuse unmittelbar oder im Abstand hintereinander Filterelemente angeordnet, wobei mindestens ein Filterelement A, welches den die Zündtemperatur des Rußes senkenden und seinen Abbrand fördernden Katalysator trägt und mindestens ein Filterelement B, welches den die Verbrennung gasförmiger Schadstoffe fördernden Katalysator trägt, einander mehrfach abwechseln.

Koberstein et. al. beschreiben in "Einsatz von Abgasnachbehandlungseinrichtungen" (VDI-Berichte No. 559; VDI-Verlag 1985, 275-296) ein Wandflußfilter, welches eine kombinierte Beschichtung mit Zündkatalysator auf den Kanalwänden der Gaseintrittsseite und mit Oxidationskatalysator auf der Gasaustrittsseite aufweist. Die Funktion des Oxidationskatalysators ist es hierbei, die während der Filterregeneration freigesetzten Kohlenwasserstoffe und Kohlenmonoxid zu oxidieren und damit unschädlich zu machen.

Die US 4,510,265 beschreibt ein selbstreinigendes Diesel-Partikelfilter. Das Filter ist mit einer Katalysatormischung aus einem Metall der Platingruppe und Silbervanadat versehen. Die Anwesenheit der Katalysatormischung verringert die Zündtemperatur der Dieselpartikel.

Die US 4,849,399 beschreibt ebenfalls eine Katalysatorzusammensetzung zur Herabsetzung der Zündtemperatur von Dieselruß. Die Zusammensetzung enthält schwefelresistente anorganische Oxide aus der Gruppe Titanoxid, Zirkonoxid, Siliciumdioxid, Aluminiumsilicat und Aluminiumoxid sowie auf dem Oxid abgeschiedene, katalytisch aktive Komponenten aus der Gruppe Platin, Palladium und Rhodium.

Gemäß der US 5,100,632 kann die Zündtemperatur von Dieselruß auch mit einer Katalysatorzusammensetzung vermindert werden, die ein Platingruppenmetall und ein Erdalkalimetall enthält. Insbesondere wird eine Katalysatorzusammensetzung aus Magnesiumoxid und Platin und/oder Rhodium vorgeschlagen.

Die US 5,758,496 beschreibt ein Partikel- und Abgasreinigungssystem, welches ein Partikelfilter enthält, dessen poröse Wände auf der Ausgangsseite direkt mit einem katalytisch aktiven Metall zur Oxidation von Kohlenmonoxid und unverbrannten Kohlenwasserstoffen beschichtet ist. Zur Herabsetzung der Zündtemperatur des auf dem Filter abgelagerten Dieselrußes wird dem Kraftstoff ein Additiv zugesetzt. Dieses Additiv besteht aus einer Organometallverbindung in einem flüssigen Trägermedium. Insbesondere handelt es sich bei den Organometallverbindungen um Kupfer-, Nickel,oder Ceroctoat.

Die US 6,023,928 beschreibt ein Verfahren zur gleichzeitigen Verminderung der im Abgas eines Dieselmotors enthaltenen Rußpartikel, unverbrannten Kohlenwasserstoffen und Kohlenmonoxid. Das Verfahren setzt ein mit Platin katalysiertes Partikelfilter in Kombination mit einem cerhaltigen Kraftstoffadditiv ein, um die Zündtemperatur des Rußes herabzusetzen.

Die GB 2 134 407 A offenbart ein Filtersystem, welches aus einer Kombination eines Oxidationskatalysators mit einem Partikelfilter besteht. Dabei ist der Oxidationskatalysator vor dem Partikelfilter in der Abgasanlage angeordnet. Durch Nacheinspritzung oder andere motorische Maßnahmen gelangen unverbrannter Kraftstoff und Kohlenmonoxid auf den Oxidationskatalysator und werden dort katalytisch zu Kohlendioxid und Wasser umgesetzt. Mit Hilfe der frei werdenden Reaktionswärme wird das Abgas und damit auch das nachgeschaltete Partikelfilter aufgeheizt.

Einen anderen Weg beschreitet die EP 0 341 832 B1. Sie beschreibt ein Verfahren zur Behandlung des Abgases von Schwerlastwagen. Das Abgas wird zuerst ohne Filtern über einen Oxidationskatalysator geleitet, um das in ihm enthaltene Stickstoffmonoxid zu Stickstoffdioxid zu oxidieren. Das Stickstoffdioxid enthaltende Abgas wird dann zum Verbrennen der auf einem nachgeschalteten Filter abgelagerten Partikel verwendet, wobei die Menge des Stickstoffdioxids ausreicht, um die Verbrennung der auf dem Filter abgelagerten Teilchen bei einer Temperatur von weniger als 400°C durchzuführen. Hiermit soll eine kontinuierliche Regeneration des Partikelfilters möglich sein, ohne daß eine periodische Nacheinspritzung von Kraftstoff zur Erhöhung der Abgastemperatur erforderlich ist.

Die EP 0 835 684 A2 beschreibt ein Verfahren zur Behandlung des Abgases von Kleinlast- und Personenkraftwagen. Das Abgas wird gemäß diesem Verfahren über zwei hintereinandergeschaltete Katalysatoren geführt, von denen der erste das im Abgas enthaltene Stickstoffmonoxid zu Stickstoffdioxid oxidiert, welches Rußpartikel, die sich auf dem zweiten Katalysator abgelagert haben zu $CO_2$ oxidiert.

Die in den beiden letzten Patentschriften beschriebenen Verfahren setzen einen hohen Anteil von Stickoxiden im unbehandelten Abgas des Dieselmotors voraus. Das ist jedoch im allgemeinen nicht im ausreichenden Maße der Fall.

In einer Pressemitteilung vom 15. April 1999 wurde von PSA Peugeot Citroën für Dieselmotoren ein Partikelfiltersystem mit periodischer Regeneration des Partikelfilters durch Abbrennen der auf dem Filter abgelagerten Rußpartikel vorgestellt. Die auf dem Filter abgelagerten Rußpartikel verbrennen in der Gegenwart von Sauerstoff erst bei einer Temperatur von 550 °C. Um die Regeneration des Partikelfilters auch während Betriebszuständen des Dieselmotors mit Abgastemperaturen von nur 150 °C (zum Beispiel während Fahrten in der Stadt) zu gewährleisten, werden mehrere Maßnahmen getroffen. Zum einen wird die Abgastemperatur durch aktive Maßnahmen auf 450 °C erhöht. Zum anderen wird dem Kraftstoff ein cerhaltiges Additiv zugesetzt, welches die natürliche Verbrennungstemperatur der Rußpartikel auf 450 °C absenkt. Zur Erhöhung der Abgastemperatur auf 450 °C wird während der Expansionsphase Kraftstoff in die Zylinder eingespritzt. Dieser Vorgang wird im folgenden als Nacheinspritzung bezeichnet. Durch die damit verbundene Nachverbrennung wird die Abgastemperatur um 200 bis 250 °C angehoben. Zusätzlich erfolgt eine weitere Nachverbrennung unverbrannter Kohlenwasserstoffe, die aus der Nacheinspritzung resultieren, an einem vor dem Filter angeordneten Oxidationskatalysator. Dadurch erhöht sich die Abgastemperatur um weitere 100 °C.

Ein weiterer, entscheidender Vorteil des Kraftstoffadditivs ist die beschleunigte Filterregeneration. Heutzutage ist es nicht möglich, die zur Einleitung der Filterregeneration nötige Nacheinspritzung in jedem Betriebspunkt zu gewährleisten. Eine Beschleunigung des Rußabbrandes wirkt daher der Gefahr einer unvollständigen Filterregeneration entgegen. Die Zeit, in der die Nacheinspritzung aufrecht erhalten werden muß, kann minimiert werden. Die Gefahr, daß das Fahrzeug während der Regeneration in einen Betriebspunkt gelangt, der für eine Nacheinspritzung ungeeignet ist, ist daher deutlich geringer.

Nachteilig bei den bekannten Verfahren und Abgassystemen, die zur Absenkung der Rußzündtemperatur dem Kraftstoff ein Additiv zufügen, ist die Tatsache, daß sich das Additiv nach Regeneration des Partikelfilters in Form einer Asche, zum Beispiel Cerasche, im Filter ansammelt. Hinzu kommt eine Asche aus der Verbrennung des mit dem Abgas ausgetragenen Schmieröls (Ölasche). Die Cerasche, die ungefähr zwei Drittel der Gesamtasche ausmacht, bildet zusammen mit der Ölasche eine pulverförmige, flockige Zusammensetzung, die als Rückstand nach Verbrennung des Rußes im Filter verbleibt.

Nach einer gewissen Betriebsdauer des Verbrennungsmotors können sich je nach Größe und Ölverbrauch des Motors mehrere hundert Gramm der Asche im Filter ansammeln und den Abgasgegendruck erheblich erhöhen, was mit einem kontinuierlich steigenden Kraftstoffmehrverbrauch einhergeht. Das Filter wird daher gewöhnlich nach einer längeren Betriebsdauer, beispielsweise nach ca. 80.000 km, durch Waschen mit Wasser von dieser Asche befreit.

Ein weiterer Nachteil dieser und solcher Systeme, die mit einem unbeschichteten Filter arbeiten, sind die hohen Kohlenmonoxidemissionen, die während der spontanen bzw. aktiven Filterregeneration auftreten. Dabei verbrennt der im Filter gesammelte Ruß mit einer Beladung von bis zu 8 g Ruß pro Liter Filtervolumen innerhalb weniger Minuten, was als Folge zu einer unvollständigen Oxidation der Rußpartikel und zu erheblichen CO-Emissionen führt.

Vor dem Hintergrund des vorgestellten Standes der Technik ist es Aufgabe der vorliegenden Erfindung, ein Partikelfilter zur Verfügung zu stellen, welches durch eine katalytische Beschichtung in der Lage ist, die Rußzündtemperatur abzusenken, den Rußabbrand zu beschleunigen und damit den Energiebedarf für die Regeneration des Rußfilters und die Gefahr eines Regenerationsabbruchs zu verringern. Außerdem soll die CO-Emission während der aktiven Filterregeneration verringert und zudem das Intervall zwischen zwei Waschungen des Filters zur Entfernung von akkumulierten Aschen verlängert werden. Ein weiterer Gegenstand der Erfindung ist ein Verfahren zur beschleunigten Verbrennung von im mageren Abgas eines Dieselmotors auf dem Partikelfilter gesammelten Rußpartikeln.

Diese Aufgabe wird durch ein Partikelfilter gemäß Patentanspruch 1 gelöst. Vorteilhafte Ausgestaltungen des Filters werden in den abhängigen Ansprüchen 2 bis 10 beansprucht. Die Ansprüche 11 bis 13 beschreiben ein Verfahren zur beschleunigten Verbrennung des auf dem Partikelfilter gemäß der Erfindung gesammelten Rußes.

Gemäß Anspruch 1 wird die Aufgabe der Erfindung durch ein Partikelfilter für die Entfernung von Ruß aus dem Abgas eines Dieselmotors gelöst, welches auf einem Filterkörper eine katalytisch aktive Beschichtung zur Beschleunigung der Verbrennung der auf dem Filter gesammelten Rußpartikel während einer Regenerationsphase enthält. Das Partikelfilter ist dadurch gekennzeichnet, daß die katalytische Beschichtung, Verbindungen des Bariums und Magnesiums sowie mindestens ein Element der Platingruppenmetalle enthält.

Unter einem Partikelfilter wird im Rahmen dieser Erfindung ein feinporöser, offenporiger Körper verstanden, der in der Lage ist, zum Beispiel die Rußpartikel im Abgas eines Dieselmotors mit einer Partikelgröße im Bereich zwischen 0,1 und 10 µm zu mehr als 80, bevorzugt mehr als 90%, mechanisch aus dem Abgasstrom herauszufiltern. Es eignen sich sogenannte Tiefenfilter aus keramischen Fasern oder Drahtgeflechten. Es können auch keramische oder metallische Schäume eingesetzt werden, sofern damit die erforderlichen Filtrationsgrade erzielbar sind. Bevorzugt werden sogenannte Wandflußfilter eingesetzt, mit denen Filtrationsgrade über 95% erhalten werden. Wandflußfilter sind wie gewöhnliche Wabenkörper für Autoabgaskatalysatoren aufgebaut. Die Filterkörper besitzen eine im allgemeinen zylindrische Gestalt und sind von einer Eintrittsstirnfläche zur Austrittsstirnfläche von Strömungskanälen für das Abgas durchzogen. Im Unterschied zu normalen Abgaskatalysatoren sind die Kanäle der Wandflußfilter an den Stirnflächen wechselseitig verstopft, so daß das Abgas bei seinem Weg von der Eintrittsstirnfläche zur Austrittsstirnfläche gezwungen ist, die porösen Kanalwände zu durchströmen. Hierbei werden die Rußpartikel aus dem Abgasstrom herausgefiltert.

Die erfindungsgemäße Beschichtung des Partikelfilters ist in der Lage, bei normalen Betriebspunkten Stickoxide vornehmlich in der Form von Nitraten einzuspeichern, und diese im sauerstoffhaltigem Abgas bei Temperaturen oberhalb von 300 bis 400 °C wieder zu desorbieren. Die Desorption der Stickoxide erfolgt hier also nicht, wie bei Stickoxid-Speicherkatalysatoren üblich, in einer reduzierenden Atmosphäre, sondern durch thermische Zersetzung in einer oxidierenden Atmosphäre. Die freiwerdenden Stickoxide und insbesondere das freiwerdende $NO_2$ ist in der Lage, bereits ab Temperaturen von 300 bis 350 °C spontan mit dem im Filter gesammelten Dieselruß gemäß Gleichungen (1) beziehungsweise (2) zu reagieren:

$$NO_{2\,(adsorb.)} \rightarrow NO_{2\,(desorb.)} \tag{1a}$$

$$C + NO_{2(desorb.)} \rightarrow CO + NO \tag{1b}$$

bzw.

$$NO_{2\,(desorb.)} \rightarrow NO + O^* \tag{2a}$$

$$C + O^* \rightarrow CO \tag{2b}$$

Das in den Reaktionsschritten (1b) beziehungsweise (2b) gebildete Kohlenmonoxid wird bei diesen Temperaturen an den Edelmetallzentren des Katalysators zu Kohlendioxid gemäß Gleichung (3) oxidiert:

$$2\,CO + O_2 \rightarrow CO_2 \tag{3}$$

Die in beiden Reaktionsschritten freiwerdende Energie schiebt im weiteren Verlauf der Filterregeneration die Verbrennung des Rußes ausschließlich mit Sauerstoff an. Das in der katalytischen Beschichtung gespeicherte NOx bzw. $NO_2$ dient nach dem derzeitigen Kenntnisstand über die Funktionsweise der Filterbeschichtung als Initialzünder für die weitere Verbrennung des im Filter gesammelten Kohlenstoffrußes mit Sauerstoff. Je größer die Menge an gespeichertem bzw. desorbiertem $NO_2$ ist, desto mehr Energie kann durch die ersten beiden Reaktionsschritte gewonnen werden und desto schneller geht die Filterregeneration vonstatten.

Bekannte NOx-Adsorbermaterialien sind Oxide, Carbonate, Hydroxide von Alkali- und Erdalkalimetallen und Lanthan sowie Oxide des Cers, Praseodyms und Oxide von Elementen mit den Atomzahlen von 22 bis 29. Diese Komponenten sind im allgemeinen mit Platingruppenmetallen, insbesondere Pt und/oder Pd und/oder Rh dotiert. Bevorzugte Speichermaterialien für die Zwecke dieser Erfindung sind basische Verbindungen von Barium, Strontium und Magnesium.

Bei der Untersuchung dieser Stickoxid-Speichermaterialien wurde überraschend festgestellt, daß die Kombination von Verbindungen des Bariums mit Verbindungen des Magnesiums ein besonders großes Speichervermögen für Stickoxide aufweist und zu einer starken und schnellen, thermischen Desorption der während der Filtrationsphase abgespeicherten Stickoxide führt.

Als Verbindungen des Bariums und Magnesiums werden bevorzugt die Oxide, Carbonate, Hydroxide oder Mischungen davon eingesetzt. Es können aber auch Verbindungen verwendet werden, die sich unter den Anwendungsbedingungen des Filters in die entsprechenden Oxide, Carbonate oder Hydroxide umwandeln, wie zum Beispiel Oxalate und Carboxylate.

Weitere Verbesserungen werden erzielt, wenn in der Beschichtung neben den Verbindungen des Bariums und Magnesiums auch Verbindungen des Cers, Zirkons, Mangans, Lanthans, Niobs oder Tantals in einer Konzentration von 10 bis 80, insbesondere 10 bis 50 Gew.-%, bezogen auf das Gesamtgewicht der Beschichtung vorliegen. Bevorzugt werden Oxide und/oder Carbonate des Cers, Zirkons, Mangans, Bariums und Magnesiums verwendet, wobei Cer und Zirkon vorteilhafterweise in Form eines Mischoxids eingesetzt werden. Besonders günstig ist eine Kombination von Ceroxid, beziehungsweise eines Cer/Zirkon-Mischoxids, mit Manganoxid, Bariumcarbonat und Magnesiumoxid in der Beschichtung. Ein Partikelfilter mit einer solchen Beschichtung zeigt in der Regenerationsphase eine sehr starke und schnelle Desorption der während der Filtrationsphase abgespeicherten Stickoxide. Die Regenerationszeit des Filters ist entsprechend verkürzt.

Die Barium und/oder Magnesiumverbindungen können als solche, das heißt in Pulverform, oder in geträgerter Form auf einem geeigneten Trägermaterial vorliegen. Bevorzugt wird als Trägermaterial für Bariumoxid ein Cer/Zirkon-Mischoxid eingesetzt, welches 1 bis 25 Gew.-% Zirkonoxid, bezogen auf das Gesamtgewicht des Mischoxids, enthält. Das Mischoxid kann zusätzlich mit 0,5 bis 20 Gew.-% mindestens eines Oxids eines Elementes aus der Gruppe gebildet aus Silicium, Scandium, Yttrium, Lanthan und den Seltenerdmetallen oder Mischungen davon, bezogen auf das Gesamtgewicht des Mischoxids, dotiert sein. Bevorzugt erfolgt eine Dotierung des Cer/Zirkon-Mischoxids mit 0,5 bis 10 Gew.-% Lanthan- und/oder Praseodymoxid, bezogen auf das Gesamtgewicht von Cer/Zirkon-Mischoxid und Lanthan- und/oder Praseodymoxid.

Vorteilhaft ist auch die Einbringung eines homogenen Mg/Al-Mischoxides in die Beschichtung als Trägermaterial für die Platingruppenmetalle, wobei Magnesiumoxid in einer Konzentration von 1 bis 40 Gew.-%, bezogen auf das Gesamtgewicht des Mg/Al-Mischoxids, vorliegt. Bevorzugt beträgt die Konzentration des Magnesiumoxids im Aluminiumoxid zwischen 5 und weniger als 28, insbesondere zwischen 10 und 25 Gew.-%. Dieses Mischoxid kann als zusätzliches oder alleiniges Trägermaterial für die Platingruppenmetalle Platin, Palladium und Rhodium oder Mischungen davon dienen. Die Kombination des Mg/Al-Mischoxids mit den Bariumverbindungen in der Beschichtung führt zu einer verbesserten Speicherung der Stickoxide.

Das erfindungsgemäße Partikelfilter wird in einem Verfahren zur Entfernung von Ruß aus dem Abgas eines Dieselmotors eingesetzt. Das Verfahren nutzt aktive und passive Maßnahmen, um den Partikelgehalt und auch die Konzentration von Kohlenwasserstoffen und Kohlenmonoxid im Abgas eines Dieselmotors zu vermindern. Das Verfahren teilt sich in eine Filtrationsphase und eine Regenerationsphase auf, die zyklisch wiederholt werden. Während der Filtrationsphase werden die Rußpartikel aus dem Abgasstrom herausgefiltert und auf dem Filter abgelagert. Gleichzeitig werden durch den vorgeschalteten Oxidationskatalysator Kohlenmonoxid und Kohlenwasserstoffe zu einem Großteil zu Kohlendioxid und Wasser umgesetzt. Wegen des geringen Gehaltes des Abgases an diesen oxidierbaren Abgaskomponenten reicht die bei der Umsetzung freiwerdende Exotherme nicht aus, um das Filter auf Regenerationstemperatur zu erwärmen.

Mit zunehmender Rußablagerung erhöht sich der Abgasgegendruck des Filters und beeinträchtigt die Leistung des Dieselmotors. Daher muß bei Erreichen eines vorgebbaren Abgasgegendruckes die Regeneration des Filters eingeleitet werden. Zu diesem Zweck muß die Abgastemperatur auf die erforderliche Rußzündtemperatur erhöht werden. Hierzu eignen sich die Nacheinspritzung von Dieselkraftstoff in die Zylinder des Dieselmotors oder in die Abgasleitung vor dem Partikelfilter, eine späte Verbrennungslage, eine mehrstufige Verbrennung oder externe Heizmaßnahmen.

Bevorzugt wird der für die Erwärmung des Partikelfilters benötigte zusätzliche Kraftstoff jedoch während der Expansionsphase in die Zylinder des Dieselmotors eingespritzt. Durch die in den Zylindern ablaufende Nachverbrennung erhöht sich dabei die Abgastemperatur schon um etwa 150 bis 200 °C. Bei der Nachverbrennung wird nicht der gesamte nacheingespritzte Kraftstoff verbrannt, sondern es gelangt ein gewisser Anteil unverbrannter Kohlenwasserstoffe ins Abgas und somit auf das Partikelfilter oder auf einen Oxidationskatalysator, der vor dem Partikelfilter angeordnet ist.

Bei der Nacheinspritzung von Kraftstoff in die Zylinder des Dieselmotors wird darauf geachtet, daß das resultierende Abgas noch netto oxidierend bleibt, damit der unverbrannte Kraftstoff vollständig auf dem Partikelfilter katalytisch verbrannt werden kann. Durch die dabei frei werdende Verbrennungswärme wird die Temperatur des Filters auf die Rußzündtemperatur angehoben. Sollte die oxidative Wirkung der Filterbeschichtung auf den unverbrannten Kraftstoff nicht ausreichend genug sein, so kann vor das Filter ein Dieseloxidationskatalysator (DOC) in die Abgasanlage eingebaut werden, der eine effektive Verbrennung der unverbrannten Kohlenwasserstoffe bewirkt. Die dabei maximal erhältliche Temperaturerhöhung hängt von der Menge des nacheingespritzten Kraftstoffes ab.

Nach Beginn der Nacheinspritzung steigt die Temperatur des Abgases zunächst sehr schnell an und nähert sich dann bei fortdauernder Nacheinspritzung asymptotisch einem Maximalwert. Ist durch die Menge des nacheingespritzten Kraftstoffes sichergestellt, daß dieser Maximalwert der Abgastemperatur über der Rußzündtemperatur liegt, so setzt schon während des Temperaturanstiegs die thermische Desorption der während des normalen Fahrbetriebs auf der Filterbeschichtung eingespeicherten Stickoxide ein. Die desorbierten Stickoxide reagieren spontan mit den auf dem Filter gesammelten Rußpartikeln unter Freisetzung von Wärme. Dadurch kann der eventuell noch im Filter verbleibende Restruß mit dem Sauerstoff des Abgases verbrannt werden.

Nach erfolgter Regeneration wird die Zuführung von zusätzlichem Kraftstoff gestoppt und die Filtrationsphase beginnt von neuem.

Durch die die Zündtemperatur des Rußes senkende und die Rußverbrennung beschleunigenden Komponenten der katalytischen Beschichtung des Partikelfilters wird für die Regeneration des Filters weniger zusätzlicher Kraftstoff verbraucht als ohne diese Komponenten. Aufgrund der verkürzten Regenerationszeit wird die benötigte Gesamtzeit für die Nacheinspritzung reduziert und die Gefahr eines möglichen Regenerationsabbruchs minimiert. Darüber hinaus gelingt es durch die Platinkomponente der Beschichtung die während der spontanen Regeneration unbeschichteter Filter auftretenden Kohlenmonoxidemissionen zu vermindern. Ein weiterer Vorteil der Erfindung gegenüber den aus dem Stand der Technik bekannten Verfahren, die Rußzündtemperatur durch Kraftstoffadditive herabzusetzen, ist die Tatsache, daß sich keine Asche der Additive im Filter ansammeln kann. Es findet lediglich, wie auch bei den anderen Verfahren, eine Ablagerung von Ölasche statt. Das Wartungsintervall zur Entfernung solcher Aschen aus dem Filter durch entsprechende Spül- oder Waschvorgänge mit Wasser kann daher wesentlich gegenüber den Verfahren mit Kraftstoffadditiven verlängert werden. Wie entsprechende Versuche gezeigt haben, ist die katalytische Beschichtung des Filters gegenüber solchen Waschvorgängen beständig.

Für das Verfahren sind verschiedene Filtertypen geeignet, wie zum Beispiel Wandflußfilter, Filter aus keramischen Fasern oder keramische oder metallische Schäume sowie Filter aus Drahtgeflechten. Bevorzugt werden Wandflußfilter aus Siliciumcarbid, Cordierit oder Natriumzirkonphosphat eingesetzt. Bei diesen Filtern wird nur die Eintrittsseite mit der katalytischen Beschichtung versehen. Die Konzentration der Beschichtung liegt zwischen 20 und 200 g/l Filterkörper, während die Konzentration des oder der Platingruppenmetalle 0,5 bis 10 g/l Filterkörper beträgt.

Bevorzugt wird das erfindungsgemäße Verfahren für die Abgasreinigung von Fahrzeugen mit Dieselantrieb eingesetzt. Das Antriebsaggregat eines solchen Kraftfahrzeug enthält für die Durchführung des erfindungsgemäßen Verfahren einen Dieselmotor und eine Abgasreinigungsanlage mit einem Dieseloxidationskatalysator und einem Partikelfilter, wobei die Abgastemperatur des Motors zur Regeneration des Partikelfilters durch Nacheinspritzung von Kraftstoff in die Zylinder des Dieselmotors während der Expansionsphase erhöht werden kann. Das Partikelfilter dieses Antriebsaggregats ist mit der schon beschriebenen katalytischen Beschichtung versehen, die sowohl NOx-Speicherkomponenten als auch Edelmetallkomponenten für die Oxidation von Kohlenmonoxid und gegebenenfalls Kohlenwasserstoffen enthält.

Eine besonders vorteilhafte Ausführungsform dieses Antriebsaggregats enthält einen Oxidationskatalysator in motornaher Position vor dem Partikelfilter, der so dimensioniert ist, daß er bei Nacheinspritzung von Kraftstoff nur einen kleinen Teil des Kraftstoffs umsetzt. Dieser Oxidationskatalysator wird bevorzugt vor oder kurz hinter dem Turbolader in den Abgasstrang des Dieselmotors eingefügt. Er erreicht auf Grund seiner motornahen Position sehr schnell seine Betriebstemperatur und kann so einen Teil der CO und HC-Emissionen während des Kaltstarts vermindern. Wegen seines kleinen Volumens kann er aber die während einer Regeneration des Partikelfilters durch Nacheinspritzung zusätzlich eingebrachten und nicht vollständig verbrannten Kohlenwasserstoffe nicht mehr umsetzen, so daß der größte Teil des nacheingespritzten Kraftstoffs auf das Partikelfilter gelangt und dort durch Kontakt mit der Oxidationsfunktion der katalytischen Beschichtung verbrannt wird.

Zur Herstellung der katalytischen Beschichtung des Filters werden die Feststoffkomponenten der Beschichtung zu einer bevorzugt wäßrigen Beschichtungssuspension verarbeitet. Das Filter wird dann auf der späteren Eintrittsseite für das Abgas unter Anwendung bekannter Verfahren mit dieser Suspension beschichtet. Gegebenenfalls wird auch die Austrittsseite des Filters beschichtet. Die Suspension wird anschließend getrocknet und calciniert. Das oder die Platingruppenmetalle können dabei schon vor Anfertigung der Beschichtungssuspension auf den Feststoffkomponenten der Beschichtung abgeschieden werden oder in Form löslicher Vorläuferverbindungen der wäßrigen Beschichtungssuspension zugefügt werden. Alternativ dazu können die Platingruppenmetalle auch erst nach Fertigstellung der Beschichtung durch eine nachträgliche Imprägnierung mit einer Lösung der Vorläuferverbindungen in die Beschichtung eingebracht werden. Nach erfolgter Imprägnierung muß der Filterkörper erneut getrocknet und calciniert werden

Die Erfindung wird im folgenden durch einige Beispiele und Vergleichsbeispiele näher erläutert. Es zeigen:

**Figur 1:**  NOx-Desorption verschiedener Filterbeschichtungen bei geringer Einspritzmenge

**Figur 2:**  NOx-Desorption verschiedener Filterbeschichtungen bei hoher Einspritzmenge

**Figur 3:**  Abgasgegendruck während der Regeneration bei niedriger Einspritzmenge

**Figur 4:**  Abgasgegendruck während der Regeneration bei hoher Einspritzmenge

In den folgenden Vergleichsbeispielen und Beispielen wurde die Absenkung der Rußzündtemperatur und die Beschleunigung des Rußabbrandes durch verschiedene NOx-Speicherbeschichtungen untersucht. Für die Untersuchungen wurden zylindrische Wandflußfilter aus Siliciumcarbid mit einer Zelldichte (Anzahl der Strömungskanäle pro Querschnittsfläche des Filters) von 41 $cm^{-2}$, einer Länge von 15,2 cm und einem Durchmesser von 14,4 cm (Volumen ca. 2,5 1) eingesetzt.

Es wurden Partikelfilter mit den in der Tabelle 1 aufgelisteten Beschichtungszusammensetzungen versehen:

Tabelle 1:

| Beschichtungszusammensetzungen | | |
|---|---|---|
| | Beschichtungskomponenten | Gewichtsverhältnis |
| Vergleichsbeispiel 1 | Pt/$CeO_2MnO_2$ | $CeO_2/MnO_2$ = 1:1 |
| Vergleichsbeispiel 2 | Pt/$CeO_2MnO_2$ + MgO | $CeO_2/MnO_2/MgO$ = 2:2:1 |
| Vergleichsbeispiel 3 | Pt/$CeO_2MnO_2$ + $BaCO_3$ | $CeO_2/MnO_2/BaCO_3$ = 2:2:1 |
| Beispiel | Pt/$CeO_2MnO_2$ + $BaCO_3$ + MgO | $CeO_2/MnO_2/BaCO_3/MgO$ = 2:2:1:1 |

Bei dem verwendeten Ceroxid handelte es sich jeweils um ein mit 30 Gew.-% Zirkonoxid stabilisiertes Material. Vor der Anfertigung der Beschichtungssuspension wurde eine Mischung aus Ceroxid und Manganoxid zunächst durch Imprägnieren mit Hexachloroplatinsäure mit der notwendigen Menge Platin belegt, getrocknet und an Luft bei 500 °C calciniert. Die Platinmenge wurde dabei so gewählt, daß in der fertigen Beschichtung eine Platinkonzentration von 3,18 g/l Filterkörper (90 g/$ft^3$) bei einer Beschichtung der Filterkörper mit 150 g der Speicherkomponenten pro Liter Filterkörper vorlag. Das so hergestellte, mit Platin aktivierte, Oxidpulver ist in der obigen Tabelle mit Pt/$CeO_2MnO_2$ bezeichnet.

Zur Beschichtung der Filterkörper wurden die mit Platin katalysierten Oxidpulver und gegebenenfalls MgO und $BaCO_3$ in einer Menge Wasser suspendiert, die der zuvor ermittelten Wasseraufnahmekapazität der Filterkörper entsprach. Diese Suspensionen wurden sorgfältig gemahlen und dann über die Eintrittsstirnflächen der Filterkörper gegossen. Danach wurden die Filterkörper getrocknet und calciniert.

**Prüfung der Partikelfilter:**

Jedes Filter wurde zunächst an einem 2,2 1 Dieselmotor (mit Direkteinspritzung) bei definierten Betriebsbedingungen mit etwa 8 g Ruß beladen. Dann wurde die Regeneration des Filters durch Anreichern des Abgasstromes mit Kohlenwasserstoffen eingeleitet. Die Kohlenwasserstoffe wurden auf einem dem Filter vorgelagerten Dieseloxidationskatalysator verbrannt.

Es wurden zwei unterschiedliche Nacheinspritzmengen angewendet, die bei ununterbrochener Nacheinspritzung zu Maximalwerten der Abgastemperatur vor dem Filter von 500 (geringe Einspritzmenge) und 600 °C (hohe Einspritzmenge) geführt hätten.

Mit dem Beginn der Nacheinspritzung wurden in Abhängigkeit von der Regenerationszeit folgende Messungen vorgenommen:

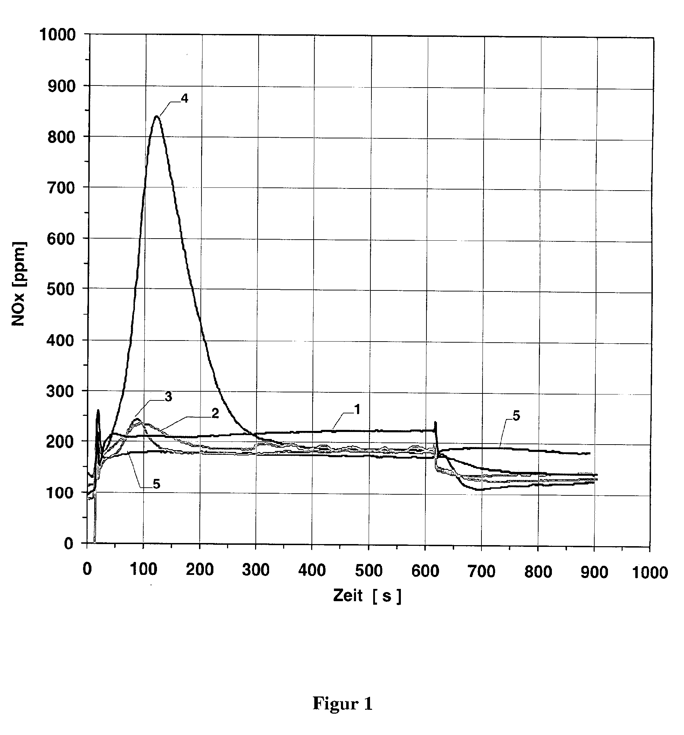

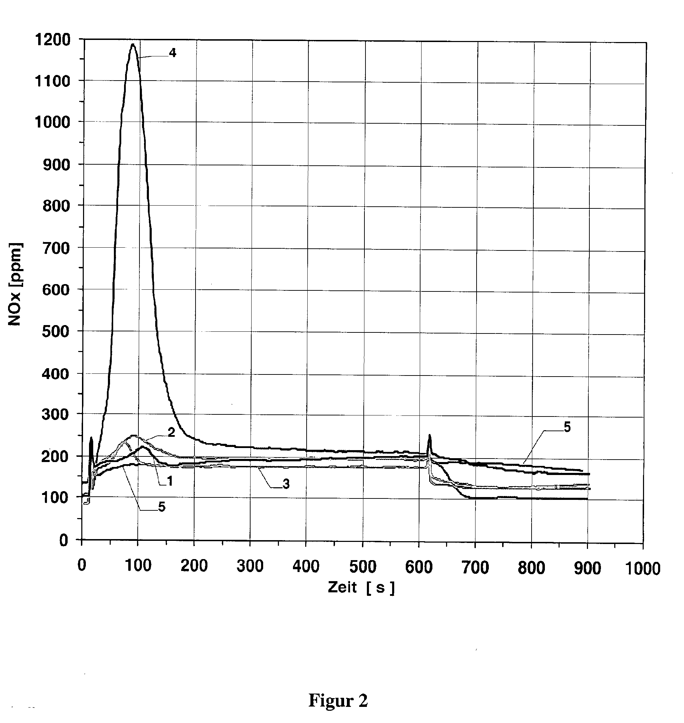

• Messung der NOx-Konzentration im Abgas vor dem Filter (Kurve 5 in den Figuren 1 und 2) und hinter dem Filter für die verschiedenen Beschichtungen (Kurve 1: Vergleichsbeispiel 1; Kurve 2: Vergleichsbeispiel 2; Kurve 3: Vergleichsbeispiel 3 und Kurve 4: Beispiel)
Figur 1 zeigt die Kurven für die Regeneration mit einer niedrigen und Figur 2 für die Regeneration mit einer hohen Nacheinspritzmenge. Die Kurven 5 in den Figuren 1 und 2 entsprechen der NOx-Rohemission des Dieselmotors. Sie ist während der Regeneration in etwa konstant.

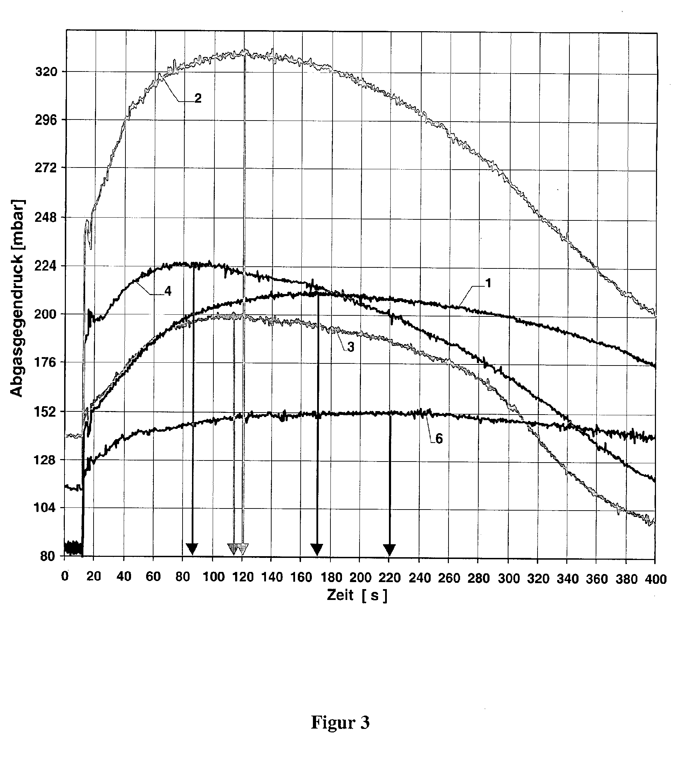

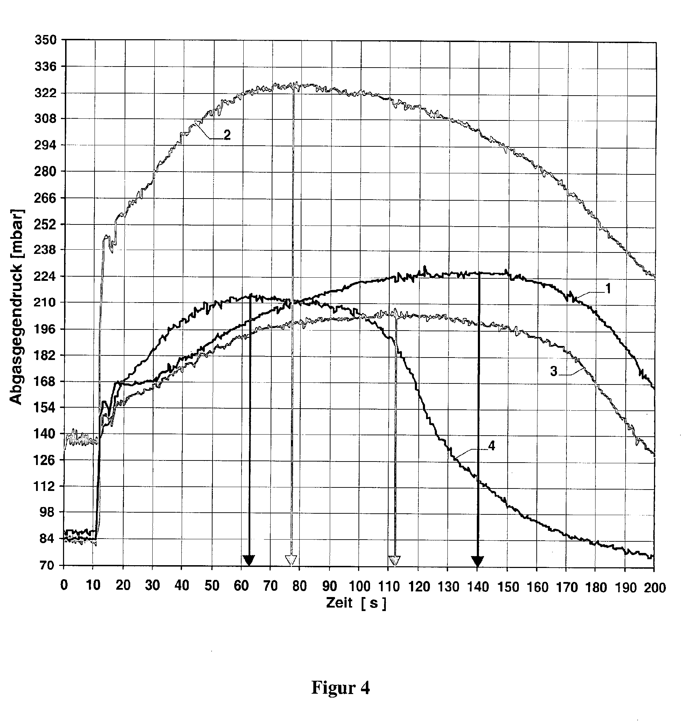

• Messung des Abgasgegendrucks während der Regeneration für ein unbeschichtetes Filter (Kurve 6 in Figur 3) sowie für die verschiedenen Beschichtungen in Figur 3 bei einer niedrigen und in Figur 4 bei einer hohen Nacheinspritzmenge (Kurve 1: Vergleichsbeispiel 1; Kurve 2: Vergleichsbeispiel 2; Kurve 3: Vergleichsbeispiel 3 und Kurve 4: Beispiel).

Während des Anstiegs der Abgastemperatur erhöhte sich durch die ansteigende Temperatur auch der Abgasgegendruck (Figuren 3 und 4). Bei Erreichen einer bestimmten Filtereingangstemperatur setzte zunächst die NOx-Desorption und anschließend der Rußabbrand ein, was daran zu erkennen war, daß der Abgasgegendruck ein Maximum durchlief und dann auf den Wert vor Belegung des Filters mit Ruß zurückfiel. Der Beginn der Filterregeneration (gleichgesetzt mit dem Maximum der Filter-Gegendruckkurve) wurde jeweils registriert und ist für die verschiedenen Filterbeschichtungen in der folgenden Tabelle 2 aufgelistet. Die abwärtsgerichteten Pfeile in den Figuren 3 und 4 markieren die Maxima der Abgasgegendruckkurven.

Tabelle 2:

| Beginn des Rußabbrandes | | |
|---|---|---|
| Filterbeschichtung 150 g/l | Regenerationsstart in [s] Nacheinspritzzeit bei niedriger Einspritzmenge | Regenerationsstart in [s] Nacheinspritzzeit bei hoher Einspritzmenge |
| Ohne | ca. 220 | |
| Pt/$CeO_2MnO_2$     1:1 | 170 | 140 |
| Pt/$CeO_2MnO_2MgO$     2:2:1 | 120 | 78 |
| Pt/$CeO_2MnO_2BaCO_3$     2:2:1 | 115 | 112 |
| Pt/ $CeO_2MnO_2BaCO_3MgO$     2:2:1:1 | 85 | 62 |

Aus den Figuren 1 und 2 ist zu ersehen, daß das NOx-Einspeicherungsvermögen der Vergleichsbeschichtungen relativ gering war. Nur die erfindungsgemäße Beschichtung (Kurve 4) zeigt während der Regeneration eine sehr starke Desorption von Stickoxiden, die zuvor von der Beschichtung adsorbiert worden waren.

Die Vergleichsbeschichtungen führten zwar auch zu einer Beschleunigung der Filterregeneration im Vergleich zum unbeschichteten Filter, eine wesentlich stärkere Beschleunigung wurde jedoch für die erfindungsgemäße Beschichtung festgestellt.

Die erfindungsgemäße Beschichtung mit einer Kombination aus Magnesiumoxid mit Bariumcarbonat in Verbindung mit Cer-, Zirkon- und Manganoxid weist offensichtlich aufgrund synergetischer Effekte eine vielfach höhere NOx-Speicherkapazität auf (siehe Figuren 1 und 2) als bekannte Filterbeschichtungen. Dementsprechend konnte der Start der Filterregeneration bei geringer und hoher Einspritzmenge erheblich beschleunigt und die Regenerationszeit des Filters verkürzt werden (Figuren 3 und 4)

**Patentansprüche**

1. Partikelfilter für die Entfernung von Ruß aus dem Abgas eines Dieselmotors enthaltend auf einem Filterkörper eine katalytisch aktive Beschichtung zur Beschleunigung der Verbrennung der auf dem Filter gesammelten Rußpartikel während einer Regenerationsphase, wobei die katalytische Beschichtung Verbindungen des Bariums und Magnesiums sowie mindestens ein Element der Platingruppenmetalle enthält.

2. Partikelfilter nach Anspruch 1, wobei die Barium- und Magnesiumverbindungen von Carbonaten, Oxalaten, Hydroxiden, Carboxylaten, Oxiden oder Mischungen hiervon gebildet sind.

3. Partikelfilter nach Anspruch 2, wobei die Barium und/oder Magnesiumverbindungen als solche oder in geträgerter Form vorliegen.

4. Partikelfilter nach Anspruch 3, wobei in der Beschichtung die Bariumverbindung in Kombination mit einem homogenen Mg/Al-Mischoxid aus Magnesiumoxid und Aluminiumoxid vorliegt, wobei Magnesiumoxid in einer Konzentration von 1 bis 40 Gew.-%, bezogen auf das Gesamtgewicht des Mg/Al-Mischoxids, im Mischoxid enthalten ist.

**5.** Partikelfilter nach Anspruch 4, wobei das oder die Edelmetalle ausgewählt sind aus Platin, Palladium, Rhodium oder Mischungen davon und vollständig oder teilweise auf dem Mg/Al-Mischoxid abgeschieden sind.

**6.** Partikelfilter nach einem der Ansprüche 1 bis 5, wobei in der Beschichtung neben den Verbindungen des Bariums und Magnesiums auch Verbindungen des Cers, Zirkons, Mangans, Lanthans, Niobs oder Tantals in einer Konzentration von 10 bis 80 Gew.-%, bezogen auf das Gesamtgewicht der Beschichtung, vorliegen.

**7.** Partikelfilter nach Anspruch 6, wobei die Beschichtung Oxide und/oder Carbonate des Cers, Zirkons, Mangans, Bariums und Magnesiums enthält.

**8.** Partikelfilter nach Anspruch 1, wobei es sich bei dem Filterkörper um einen Wandflußfilter mit einer Eintritts- und einer Austrittsseite aus Siliciumcarbid, Cordierit oder Natriumzirkonphosphat handelt.

**9.** Partikelfilter nach Anspruch 8, wobei die Beschichtung beidseitig auf das Filter aufgebracht ist.

**10.** Partikelfilter nach Anspruch 8, wobei die Beschichtung nur auf der Eintrittsseite des Filters aufgebracht ist.

**11.** Verfahren zur beschleunigten Verbrennung von im mageren Abgas von Verbrennungsmotoren auf einem Partikelfilter gesammelten Rußpartikeln, wobei die Rußpartikel eine Rußzündtemperatur aufweisen und das Partikelfilter von Zeit zu Zeit durch Anheben der Temperatur des Partikelfilters über die Rußzündtemperatur und Verbrennen der Rußpartikel aktiv regeneriert wird, wobei das Partikelfilter eine katalytische Beschichtung gemäß einem der Ansprüche 1 bis 10 enthält.

**12.** Verfahren nach Anspruch 11, wobei die Anhebung der Temperatur des Filters über die Rußzündtemperatur durch eine motorseitig eingeleitete Nacheinspritzung von Kraftstoff erfolgt.

**13.** Verfahren nach Anspruch 12, wobei vor dem Partikelfilter ein Dieseloxidationskatalysator angeordnet ist, auf dem der nacheingespritzte Kraftstoff verbrannt und dadurch die Temperatur des Filters über die Rußzündtemperatur angehoben wird.

**Figur 1**

**Figur 2**

**Figur 3**

**Figur 4**

**Europäisches Patentamt**

## EUROPÄISCHER RECHERCHENBERICHT

Nummer der Anmeldung

EP 03 00 6877

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 147 802 A (KEMIRA METALKAT OY) 24. Oktober 2001 (2001-10-24) * Seite 6, Zeile 5 - Seite 7, Zeile 48; Ansprüche; Abbildung 1; Tabelle 1 * --- | 1-3,5-13 | F01N3/035 F01N3/023 B01J23/58 B01D53/94 |
| X | EP 1 127 603 A (MAZDA MOTOR) 29. August 2001 (2001-08-29) * Seite 4, Zeile 12 - Zeile 47 * * Seite 14, Zeile 18 - Zeile 29 * * Seite 19, Zeile 8 - Zeile 23; Beispiele * --- | 1-3,5-13 | |
| X | EP 0 982 066 A (DEGUSSA) 1. März 2000 (2000-03-01) * Seite 8, Zeile 8 - Zeile 14; Beispiele 4-7; Tabelle 1 * --- | 1-13 | |
| X | EP 0 945 608 A (DEGUSSA) 29. September 1999 (1999-09-29) * Seite 7, Zeile 50 - Seite 9, Zeile 9 * --- | 1-13 | |
| A | WO 01 12320 A (JOHNSON MATTHEY PLC ;WILKINS ANTHONY JOHN JOSEPH (GB); BRISLEY ROB) 22. Februar 2001 (2001-02-22) * Seite 5, Zeile 13 - Seite 6, Zeile 25; Ansprüche; Abbildung 1 * ----- | 1-13 | RECHERCHIERTE SACHGEBIETE (Int.Cl.7) F01N B01J B01D |

Der vorliegende Recherchenbericht wurde für alle Patentansprüche erstellt

| Recherchenort | Abschlußdatum der Recherche | Prüfer |
|---|---|---|
| MÜNCHEN | 4. Juli 2003 | Eijkenboom, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**          EP 03 00 6877

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-07-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 1147802 | A | 24-10-2001 | FI | 20000854 A | 11-10-2001 |
| | | | EP | 1147802 A1 | 24-10-2001 |
| | | | US | 2002013226 A1 | 31-01-2002 |
| EP 1127603 | A | 29-08-2001 | JP | 2001310131 A | 06-11-2001 |
| | | | EP | 1201302 A1 | 02-05-2002 |
| | | | EP | 1127603 A1 | 29-08-2001 |
| | | | WO | 0162383 A1 | 30-08-2001 |
| | | | US | 2001022956 A1 | 20-09-2001 |
| | | | US | 2002141908 A1 | 03-10-2002 |
| EP 0982066 | A | 01-03-2000 | DE | 19838282 A1 | 02-03-2000 |
| | | | AU | 4466799 A | 09-03-2000 |
| | | | BR | 9903875 A | 31-10-2000 |
| | | | CN | 1263789 A | 23-08-2000 |
| | | | EP | 0982066 A1 | 01-03-2000 |
| | | | JP | 2000084405 A | 28-03-2000 |
| | | | KR | 2000017478 A | 25-03-2000 |
| | | | PL | 335071 A1 | 28-02-2000 |
| | | | TR | 9902000 A2 | 21-04-2000 |
| | | | US | 6350421 B1 | 26-02-2002 |
| | | | ZA | 9905349 A | 24-02-2000 |
| EP 0945608 | A | 29-09-1999 | DE | 19813654 A1 | 30-09-1999 |
| | | | AT | 229618 T | 15-12-2002 |
| | | | AU | 735504 B2 | 12-07-2001 |
| | | | AU | 2249899 A | 07-10-1999 |
| | | | BR | 9901346 A | 18-04-2000 |
| | | | CN | 1234473 A ,B | 10-11-1999 |
| | | | DE | 59903707 D1 | 23-01-2003 |
| | | | EP | 0945608 A2 | 29-09-1999 |
| | | | JP | 11350945 A | 21-12-1999 |
| | | | PL | 332227 A1 | 11-10-1999 |
| | | | TR | 9900707 A2 | 21-10-1999 |
| | | | TW | 402660 B | 21-08-2000 |
| | | | US | 6145303 A | 14-11-2000 |
| | | | ZA | 9902321 A | 30-09-1999 |
| WO 0112320 | A | 22-02-2001 | EP | 1133355 A1 | 19-09-2001 |
| | | | WO | 0112320 A1 | 22-02-2001 |

EPO FORM P0461

Für nähere Einzelheiten zu diesem Anhang : siehe Amtsblatt des Europäischen Patentamts, Nr.12/82